# EUROPEAN PATENT SPECIFICATION

(11) **EP 2 110 286 B1**
(45) Date of publication and mention of the grant of the patent: **21.12.2011**
(21) Application number: 08154800.0
(22) Date of filing: 18.04.2008
(51) Int. Cl.: B60R 21/231

(54) **Pre-impact deployment of air bag.**
Airbag-Einsatz vor dem Zusammenstoß
Déploiement en pré-impact de coussin d'air

(43) Date of publication of application: 21.10.2009
(73) Proprietor: Ford Global Technologies, LLC, Dearborn, MI 48126 (US)
(72) Inventor: Heurlin, Fredrik, S-423 56 Torslanda (SE); Harda, Peter, S-413 24 Göteborg (SE); Cuddihy, Mark, New Boston 48164 (US); Rao, Mike, Novi 48375 (US)
(74) Representative: VALEA AB

(56) References cited:
- WO-A-2006/101588
- WO-A-2006/102432
- US-A1- 2002 158 456

## Description

### TECHNICAL FIELD

The present invention relates to an air bag deployment arrangement for a vehicle and a method for deploying the air bag deployment arrangement.

### BACKGROUND OF THE INVENTION

Air bag arrangements are widely used in the vehicle industry and have provided passengers with enhanced safety for the last decades. In an automotive vehicle it is common to position air bags in the hub of the steering wheel, in a recess in the instrument panel, in the seats, in the door panels or in the A, B and C beams. Other positions are of course also possible. Independently of the location of the air bag, the air bag is required to inflate very fast and at the correct moment.

Air bags are usually in fluid communication with a gas emitting inflator, which in turn is generally in communication with an impact sensor. During e.g. a frontal collision between two vehicles, the sensor, e.g. an accelerometer, detects a very rapid deceleration during the vehicles impact. The collision generates an impact pulse which runs through the vehicle; as a consequence, passengers are thrown in the forward direction. Upon detection of the impact, the impact sensor triggers the gas emitting inflator to inflate the air bag, which receives the passenger. It has been found that the inflation of the air bag may be varied depending upon the severity of the collision; such an arrangement is disclosed in US 6,454,300 B1. The arrangement comprises a release mechanism to hold restraining air bag tethers, which can be selectively released at a predetermined condition to provide an air bag of varying size depending on the severity of the collision.

As mentioned above, a passenger is thrown forward during a frontal collision due to the impact pulse imparted by the impact. To minimize or prevent injuries to the passengers during a collision it is vital that the retardation of the passenger is kept as low as possible. The document mentioned above provides for an arrangement by means of varying the size of the air bag depending on the severity of the collision. Another air bag arrangement, similar to the one mentioned above, is disclosed in US 2007/0246924 A1. The air bag arrangement utilizes releasable tethers which can be released at a predetermined condition. Both the documents above utilize impact sensors which detect the ongoing impact. Additlonally in US 2007/0246924 A1, the arrangement can be complemented with seat position sensors, an occupant position sensor, a seatbelt usage sensor or a seat weight sensor. All sensors are used to provide an inflation of the air bag to minimize the sudden retardation of the passenger during collision. However, even with these systems personal injuries are not uncommon in the event of a collision.

Document WO 2006/101588 A discloses an airbag restraint system for use in automotive protective systems to provide occupant restraint in pre-impact and impact conditions. The airbag restraint system comprises a housing; first and second inflators at least partially disposed within the housing, an inflatable airbag cushion; and a tether coupled to the interior surface of the airbag cushion at a distal end and releasably secured at a proximal end of the tether. The first inflator is adapted to only deploy in a pre-impact condition and the second inflator to deploy in pre-impact and impact conditions.

During a normal collision using arrangements as described above, a passenger's head moves about 120-130 mm (about 5 inches) from the moment of impact to the moment when the air bag is fully deployed. Further, the general deployment time of an air bag is about 30 ms (milliseconds). This ratio is also known as the 5/30 rule within the industry. Considering that the general total retardation distance for a passenger, e.g. in the driver's seat, is about 450 mm of which only 300 mm up to this date is used, there remains a need for further improved methods and arrangements which soften the retardation of the passenger and increase the retardation distance of the passenger during impact to minimize personal injuries.

### SUMMARY OF THE INVENTION

It is an object of the present invention to at least partly solve the above mentioned drawbacks. More specifically, said drawbacks are at least partly solved by an air bag deployment arrangement for a vehicle according to the present invention. The air bag deployment arrangement comprises
at least one air bag which in turn comprises at least a first deployment volume, a second deployment volume and a pre-deployment volume. The first deployment volume is larger than the second deployment volume. The air bag arrangement further comprises at least one impact sensor, the at least one impact sensor is arranged in working cooperation with the at least one air bag to detect a scenario at which the at least one air bag is to be deployed. The scenario is a pre-impact scenario and the at least one impact sensor is a pre-impact sensor arranged to detect an imminent impact. The air bag deployment arrangement is arranged to deploy the at least one air bag before the impact and the at least one air bag is deployed into the first deployment volume; the first deployment volume is adapted for a pre-impact deployment. The present invention provides for a safe air bag arrangement which gives a passenger a longer retardation distance during an impact, mainly because the air bag is provided with a larger volume than that which is practically possible when deploying an air bag post-impact. Thereby less impact pulse is imparted to the passenger.

In terms of the adaptation of the air bag deployment volume, the inventors have found that by taking into account that a passenger, before impact, has not yet been affected by the impact pulse, the air bag deployment volume can be larger than that which is practically possible when the air bag is deployed post-impact. The passenger's safety is thereby enhanced.

The second deployment volume is preferably adapted for a post-impact deployment. Optionally, the air bag deployment arrangement may comprise a post-impact sensor arranged to detect an impact, the post-impact sensor is in working cooperation with the at least one air bag to deploy the at least one air bag. In these embodiments according to the present invention, the effects of a pre-impact deployment can be combined with the effects and safety of a post-impact deployment of at least one air bag. This is specifically advantageous since imminent impacts frequently can not be detected with sufficiently high accuracy, a post-impact deployment arrangement functions as a back-up arrangement if the pre-impact deployment fails or is not detected with sufficiently high accuracy for some reason.

In an embodiment according to the present invention, the first and second deployment volume is regulated by means of at least one releasable restraining device. The releasable restraining device is arranged to restrain the at least one air bag from reaching the first deployment volume, especially during a post-impact deployment. The releasable restraining device is optionally arranged to be released before impact, so that the at least one air bag can be deployed into the first deployment volume following the pre-impact deployment. An example of the releasable restraining device is at least one releasable tether; this example will be further developed in greater detail below. By using releasable restraining devices predictable first and second deployment volumes can be provided, although alternatively, a first and a second deployment volume can be provided by other means, such as by inflating the air bag with different amounts of gas. In such a case a two step gas generator can be used. The first and second deployment volumes can also be regulated by means of active ventilation of the air bag.

An important aspect of the present invention is the use of at least one pre-impact sensor. Optionally the pre-impact sensor is selected from the following group of sensors; radar sensors such as forward long range radar sensors, cameras such as high resolution digital imaging recorders, laser sensors such as closing velocity laser sensors. These sensors are known per se and will not be described in greater detail. These sensors have been found to be reliable, but even more importantly, it has been found that they complement each other; hence, it is well within the boundaries of the present invention that the above mentioned pre-impact sensors are combined and used together. An aspect of a pre-impact sensor is of course that a pre-impact sensor is arranged to detect an imminent impact of an object with the vehicle.

The air bag deployment arrangement can further comprise a processing unit. The processing unit, such as a computer, e.g. an on-board vehicle computer or the like, and the pre-impact sensor and/or post-impact sensor, if such if present, or any other sensor if such is present, are arranged in working cooperation with the at least one air bag. The processing unit actuates the deployment of the air bag by analysing the input from each sensor and thereby possibly detects a scenario at which the at least one air bag should be deployed. Such a scenario can be an imminent impact, which would trigger the processing unit to deploy the at least one air bag, pre-impact, to its first deployment volume. By using a processing unit, pre-determined scenarios can be detected. The processing unit can for instance be programmed to detect a specific scenario, at which an imminent impact can be determined with a very high accuracy, such as a frontal collision with another vehicle. It has been found that this is very advantageous since predicting imminent impacts with very high accuracy is very difficult. Although it is mentioned that only one processing unit is used, it is well within the boundaries of the present invention to use more than one processing unit, e.g. at least one processing unit, two, three or more, processing units can be used. The processing units can be connected together or act as separate units towards e.g. specified sensors and/or selected air bags.

Additional sensors can be connected to the air bag arrangement. For instance, at least one additional sensor selected from the following group of sensors can be provided with the air bag arrangement; accelerometer, roll over sensor, brake sensor, occupant positioning sensors such as seatbelt usage sensor, seat positioning sensor or vision system. By adding these kinds of sensors, the probability for a correct, and thereby successful, pre-impact deployment of an air bag can be more accurately determined. especially when combined with a processing unit as described above.

The present invention also relates to a method for deploying an air bag using an air bag deployment arrangement for a vehicle, as described above. Specifically, the air bag deployment arrangement comprises; at least one air bag, the at least one air bag comprises at least a first and a second deployment volume, and a pre-deployment volume. The first deployment volume is larger than the second deployment volume. At least one impact sensor, the impact sensor is arranged in working cooperation with the at least one air bag to detect a scenario at which the at least one air bag is to be deployed. The impact sensor is a pre-impact sensor arranged to detect an imminent impact and the method comprises the steps of; detecting a pre-impact scenario and thereby an imminent impact;
deploying the at least one air bag before the impact. The at least one air bag is deployed into its first deployment volume; the first deployment volume is adapted for a pre-impact deployment. A method for deploying an air bag using an air bag deployment arrangement according to the present invention gives a passenger enhanced safety; mainly due to the fact that a passenger is provided with a longer retardation distance since the air bag can be inflated to a larger volume than that which is otherwise possible when deploying the air bag post-impact.

In an embodiment according to the present invention, the method further comprises the step of; releasing a releasable restraining device to enable the at least one air bag to be deployed into the first deployment volume. Such a releasable restraining device can be at least one releasable tether, however, more accurate shaping of the air bag can be provided if two or more tethers are used. By using this kind of mechanical control of the air bag deployment volume, it has been found that very reliable results are achieved. Alternative methods are however possible such as using a different amount of inflation gas when inflating to the first deployment volume or the like.

The air bag deployment arrangement can further comprise a post-impact sensor arranged in working cooperation with the at least one air bag. The method further comprises the step of; detecting an impact by means of a post-impact sensor; deploying an air bag to a second deployment volume, the second deployment volume is adapted for a post-impact deployment.

The air bag deployment arrangement can further comprise a processing unit and the method further comprises the step of; determining the probability of an imminent impact by taking into account a pre-programmed scenario, the determined probability of an imminent impact being the basis for the pre-impact deployment of the air bag. This step enhances the probability of a correct determination and thereby a correct deployment of the air bag into the first deployment volume.

When the air bag deployment arrangement comprises a pre-impact sensor arrangement comprising a long range radar sensor and a camera, the method can further comprise the steps of; detecting a radar echo by means of the long range radar sensor to determine an in bounding object's speed and distance; determining the type and size of the object by means of the camera; processing the output of the long range radar sensor and the camera in the processing unit; determining if the condition for deployment of the air bag into the first deployment volume is fulfilled or not. Additionally, a laser sensor, preferably a closing velocity laser sensor, can be connected. By using the laser sensor, a more accurate determination of the speed and distance of an object on a collision course can be made. When an object is within reach of the laser sensor the measurements of the long range radar sensor can be replaced by the measurements of the laser sensor.

The air bag deployment arrangement can also comprise means for active ventilation of the air bag to control the duration of deployment of the first deployment volume. By means of actively control the deployment time during deployment to the first deployment, a safer inflation of the air bag is achieved since the actual duration time of the deployment is controlled in an efficient way.

### DEFINITION

By the term "passenger" it is meant any person or occupant present in the vehicle, including the driver.

### BRIEF DESCRIPTION OF THE DRAWINGS

The present invention will be described in greater detail with reference to the accompanying figures, wherein;
figure 1 a shows a schematic cross section of a vehicle with a view from the side, an air bag deployment arrangement according to the present invention is shown deployed into a second deployment volume just after impact;
figure 1b shows a schematic cross section of a vehicle with a view from the side, an air bag deployment arrangement according to the present invention is shown deployed into a first deployment volume just before an imminent impact;
figure 2 shows a first and a second vehicle on a collision course with a view from above.

### DETAILED DESCRIPTION OF PREFERRED EMBODIMENTS

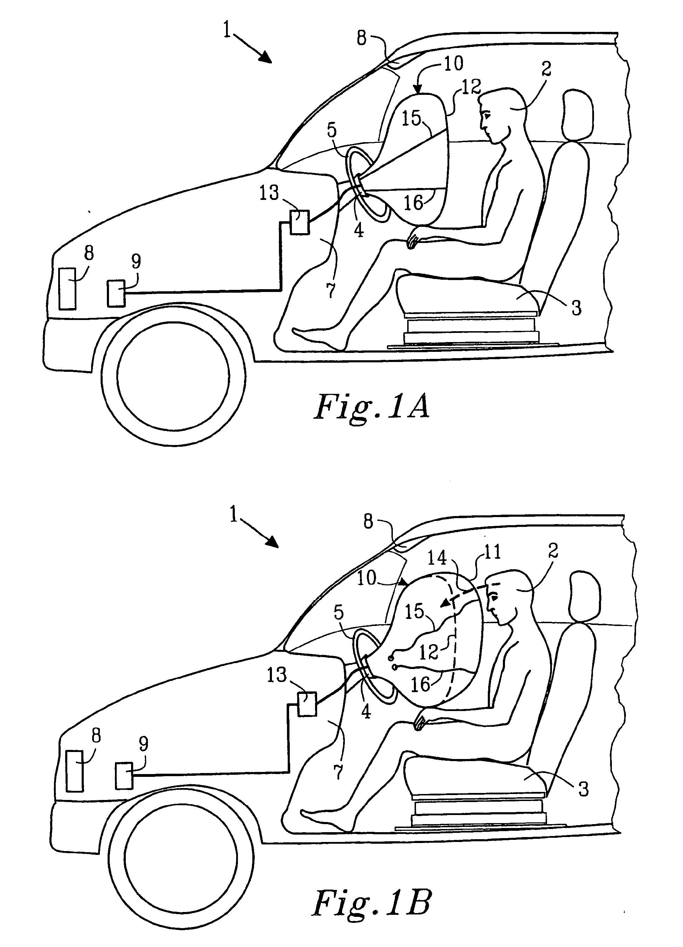

Figure 1a-1b shows a schematic cross section of a vehicle 1 just after deployment of the air bag 10 into a specified deployment volume 11, 12. The deployment volume can be a post-impact deployment, as illustrated in figure 1a, or a pre-impact deployment, as illustrated in figure 1b, dependent on the detected scenario, as will be clear when reading this description. Figure 1a-1b shows a passenger 2, in this case the driver of the vehicle 1, positioned in the driver seat 3. The air bag is deployed from the hub 4 of the steering wheel 5, positioned in the instrument panel 7 of the vehicle 1. A pre-impact sensor arrangement 8 and a post-impact sensor 9 are arranged in working cooperation with the air bag 10. In the shown embodiment of the present invention, a processing unit 13 is arranged to actuate the deployment of the air bag 10. As is showed, only one air bag 10 is deployed, however, it is well within the boundaries of the present invention that more than one air bag is deployed simultaneously or sequentially, e.g. 2, 3, 4, 5 or more air bags can be deployed pre-impact and/or post-impact.

The air bag 10 comprises a first and a second deployment volume 11, 12; the second deployment volume 12 is indicated with dotted lines in figure 1b. Before deployment (not shown) the air bag can be said to have a pre-deployment volume, in practice, this volume is very small since the air bag is snugly fitted in the hub 4 of the steering wheel 5. The first deployment volume 11 is adapted for deployment before the vehicle collides, i.e. pre-impact. As the air bag 10 is deployed pre-impact, the air bag volume, in this case the first deployment volume 11 can be significantly larger than the volume of an air bag which is deployed after impact, i.e. post-impact. In the shown embodiment of the present invention, this is equivalent with the second deployment volume 12 of the air bag 10, as illustrated in figure 1 a. Since the first deployment volume 11 is larger than the second deployment volume 12; the passenger 2 has a significantly longer retardation distance, indicated by the dotted line with the reference number 14 in figure 1b, during the impact.

The deployment of the first and the second deployment volumes 11, 12 is, in the shown embodiment of the present invention, controlled by means of a releasable restraining device in the form of two releasable tethers 15, 16. As seen in figure 1b, the releasable tethers 15, 16 have been released from their attachment position to the hub 4 of the steering wheel 4, on the contrary, as seen in figure 1a, in which the releasable tethers 15, 16 are still connected to the hub 4 of the steering wheel 5.

When an imminent impact is detected by means of the pre-impact sensor arrangement 8, the pre-impact sensor arrangement 8 triggers the inflation of the air bag 10 and releases the tethers 15,16 at the moment of inflation, so that the air bag 10 can be deployed to the first deployment volume 11 which is adapted for a pre-impact deployment. A pre-impact deployment of the air bag 10 utilizes the fact that the passenger and the vehicle have not yet been affected by the impact pulse imparted by the impact of the vehicle; hence the air bag can be inflated to a larger volume. The passenger 2 is hence protected during the actual impact by an air bag which provides a longer retardation distance for the passenger 2 as,compared with an air bag which is deployed after impact.

The air bag 10 can have several different configurations to meet the requirement of having a first and a second deployment volume. For instance, the air bag 10 can be arranged with releasable tethers 15, 16 as shown in figure 1a-1b. The specific release mechanism of the releasable tethers can be pyrotechnical or optionally as described in US 2007/0246924 A1. As an alternative it is possible that the air bag arrangement comprises a first air bag which is deployable into a first deployment volume, and a second air bag which is deployable into a second deployment volume, the first air bag is deployed before impact. The first air bag is adapted for a pre-impact deployment while the second air bag is adapted for a post-impact deployment.

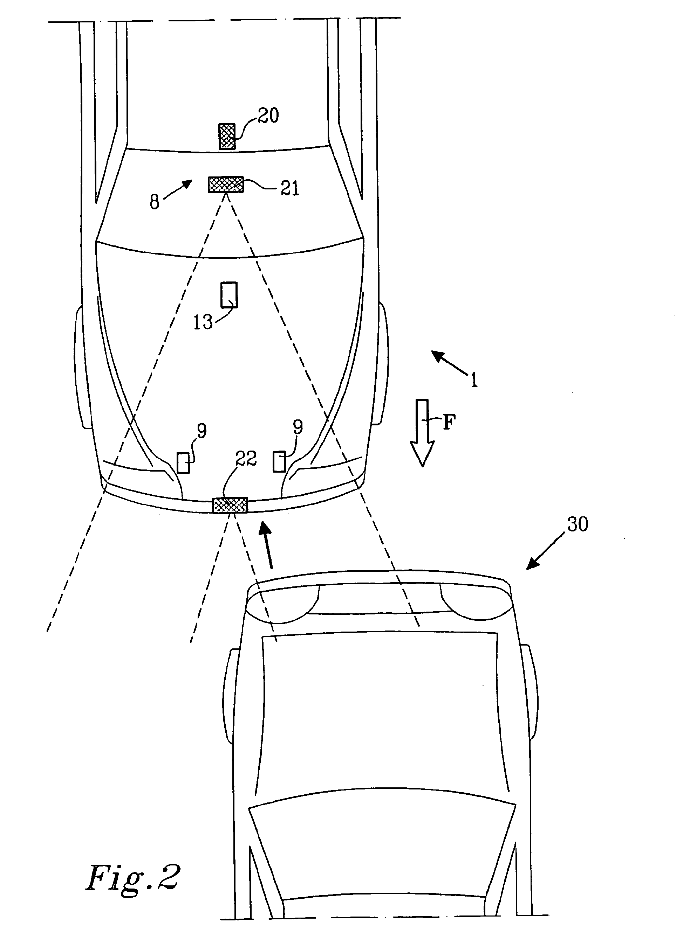

Figure 2 shows the vehicle 1 as seen from above with a view towards the roof of the vehicle 1. The vehicle 1 is driving in the direction F meeting an object, in this non-limiting example, a second vehicle 30 driving in the opposite direction of the direction F is on a collision course with the vehicle 1. The pre-impact sensor arrangement 8 comprises a camera 20, a laser sensor 21, such as a closing velocity laser sensor, and forward looking long range radar 22. The sensor arrangement 8 communicates with the processing unit 13 using a wireless technique e.g. blue tooth, WLAN or the like, and/or optionally via conventional wires.

The function and methodology of the present invention will be described hereafter in greater detail with reference to the non-limiting example illustrated in figure 2.

As seen in figure 2, the vehicle 1 and the second vehicle 30 are approaching each other substantially head on, on a collision course. When the distance between the vehicle 1 and the second vehicle 30 is about 100 m, the forward looking long range radar 22 detects a radar echo from the vehicle 30. From the detection of the radar echo from the vehicle 30, the forward looking long range radar 22 tracks the vehicle 30, keeping the vehicle 30 under surveillance. When the vehicle 1 and the vehicle 30 are separated by about 50 m, the camera 20 detects the vehicle 30 and starts tracking the vehicle 30. The radar echo and the image identified by the camera 20 are merged to a target, equivalent to the vehicle 30, which is tracked towards the vehicle 1.

In this scenario, the forward looking long range radar 22 provides values of the vehicle's 30 speed and distance while the camera 20 detects the type of object, in this case a vehicle, and the size of the vehicle 30. To more accurately detect whether an impact is imminent, a laser sensor 21 can be provided with the air bag arrangement. The laser sensor 21 uses a frequency of about 100 Hz, while the forward looking long range radar 22 uses about 10 Hz. It has been found that a higher measuring frequency is beneficial as the distance between the vehicle 1 and the colliding object decreases. The lower frequency of the camera is generally due to complex imaging processing. As soon as the laser sensor 21 detects the vehicle 30, it replaces the signal received from the forward looking long range radar 22 and provides the processing unit 13 with a more accurate measurement of the distance and speed of the vehicle 30. This permits the processing unit 13 to predict a possible impact and the time to impact more accurately.

The processing unit 13 executes an algorithm for determining whether to activate any air bags, which air bags and when to activate them, i.e. to inflate them. The present invention is illustrated with the inflation of one frontal air bag arranged in the hub of the steering wheel only, as shown in figure 1a-1b. However as mentioned above, additional air bags can be deployed. The processing unit 13 determines whether the probability for an imminent impact is sufficiently high for a pre-impact deployment of the air bag and thereby deployment into the first deployment volume 11, as illustrated in figure 1b, based on the signals received from the pre-impact sensor arrangement 8, in this case, input from the forward looking long range radar 22, the camera 20 and the laser sensor 21. However, due to difficulties in predicting all possible pre-impact scenarios, the air bag arrangement is preferably provided with post-impact sensors 9, which also communicate with the processing unit 13. If the processing unit 13 cannot with a high accuracy predict an imminent impact, the processing unit 13 will not deploy the air bag 10 into the first deployment volume 11, since such a deployment could cause serious damage to the passenger or any third party (by e.g. incapacitating the driver). If the processing unit 13 determines that the probability of an imminent impact is too low for a pre-impact deployment of the air bag 10, the processing unit 13 awaits the input from the post-impact sensors 9.

In an embodiment according to the present invention, both pre-impact sensor arrangements and post-impact sensor arrangements can be used. They may further be used as separate arrangements to determine whether to inflate any air bags or optionally they can be used simultaneously.

The processing unit 13 can, for instance, be a computer. As such it can be programmed to recognize different inputs from each sensor 8, 9, 20, 21, 22. By means of programming the processing unit 13, different scenarios can be preprogrammed and the processing unit 13 can be arranged to detect such a programmed scenario by running a suitable algorithm. As an example, a frontal collision with a vehicle can be programmed and the sensors can thereby identify a real scenario with a pre-programmed scenario, to thereby detect and predict such an event with a higher accuracy than would otherwise be possible simply by determining an imminent impact by means of only the signals from the pre-impact sensors.

In this non-limiting example, a prerequisite for inflating the air bag in a pre-impact scenario is that all of the pre-impact sensors are activated to provide measurements of an approved target. In this case all three sensors, i.e. the forward looking long range radar 22, the camera 20 and the laser sensor 21, have been actived to provide an approved target. Optionally, an additional prerequisite can be that the sensors have been activated in a specific order, preferably in the order of; the forward looking long range radar 22, the camera 20, the laser sensor 21.

When using a pre-impact sensor arrangement and a post-impact sensor arrangement simultaneously, air bags can be deployed pre-impact, after the probability for an imminent impact has been determined as very high by a processing unit. The processing unit decision being based on the input from a pre-impact sensor arrangement. After impact, the post-impact sensor arrangement detects the impact and deploys post-impact air bags.

As is understood when reading this description, a pre-impact deployment of an air bag to a first deployment volume, which is larger than a second deployment volume, adapted for a post-impact deployment, can be dangerous if not deployed at an actual imminent impact. Hence there are aspects to the probability which can be used to improve the determination of the probability of an imminent impact. For instance the air bag arrangement can be further improved by connecting the processing unit to brake sensors or e.g. accelerometers, which are arranged to detect whether the vehicle is under heavy retardation e.g. during an emergency brake. Should this kind of scenario be detected, the probability can be set slightly lower than what would otherwise be the probability if no heavy retardation was detected. Additional sensors, whose input can be utilized in the same manner, can be vehicle rollover sensors, such as a gyrometer. The air bag arrangement may also be combined with occupant positioning sensors such as seatbelt usage sensor, seat positioning sensor, a vision system for the occupant position with respect to the instrument panel etc.

It is also within the boundaries of the present invention that active ventilation is used to control the air flow out form the air bag, especially when the air bag is deployed to its first deployment volume since such a pre-impact deployment requires to maintain gas pressure during a longer period of time than a post-impact deployment of the air bag. For instance, the active ventilation can be controlled by passive pressure controlled silicone membranes, pyrotechnical release controlled devices, such as pyrotechnical controlled ventilation hatches or by means of trunk vents.

## Claims

1. An air bag deployment arrangement for a vehicle (1), said air bag deployment arrangement comprises;
at least one air bag (10), said at least one air bag (10) comprises at least a first deployment volume (11), a second deployment volume (12) and a pre-deployment volume, said first deployment volume (11) being larger than said second deployment volume (12);
at least one pre-impact sensor (8, 20, 21, 22), said at least one pre-impact sensor (8, 20, 21, 22) is arranged in working cooperation with said at least one air bag (10) to detect an imminent impact at which said at least one air bag (10) is to be deployed,
wherein said air bag deployment arrangement is arranged to deploy said at least one air bag (10) before said imminent impact and in that said at least one air bag (10) is deployed into said first deployment volume (11), said first deployment volume (11) being adapted for a pre-impact deployment,
**characterized in**
**that** said imminent impact is detected as a pre-impact scenario,
said air bag deployment arrangement comprises a processing unit (13) and in that said at least one pre-impact sensor (8, 20, 21, 22) is arranged in working cooperation with said processing unit (13) and said at least one air bag (10), wherein said processing unit (13) actuates said deployment.

2. The air bag deployment arrangement according to claim 1, **characterized in that** said second deployment volume (12) is adapted for a post-impact deployment.

3. The air bag deployment arrangement according to claim 1 or 2, **characterized in that** said air bag deployment arrangement further comprises a post-impact sensor (9) arranged to detect an impact, said post-impact sensor (9) being in working cooperation with said at least one air bag (10) to deploy said at least one air bag (10) to said second deployment volume (12).

4. The air bag deployment arrangement according to any of the preceding claims, **characterized in that** said first and second deployment volumes (11, 12) are regulated by means of a releasable restraining device, said releasable restraining device being arranged to restrain said at least one air bag (10) from reaching said first deployment volume (11) during deployment into said second deployment volume (12).

5. The air bag deployment arrangement according to claim 4, **characterized in that** said releasable restraining device is arranged to be released before impact, so that said at least one air bag (10) can be deployed into said first deployment volume (11) during said pre-impact deployment.

6. The air bag deployment arrangement according to claim 4 or 5, **characterized in that** said releasable restraining device comprises at least one releasable tether (15, 16).

7. The air bag deployment arrangement according to any of the preceding claims, **characterized in that** said at least one pre-impact sensor (8, 20, 21, 22) is selected from the following group of sensors; radar sensors, cameras and laser sensors.

8. The air bag deployment arrangement according to any of the preceding claims, **characterized in that** it comprises at least one additional sensor selected from the following group of sensors; accelerometer, roll over sensor, brake sensor, occupant positioning sensors such as seatbelt usage sensor, seat positioning sensor or vision system.

9. The air bag deployment arrangement according to any of the preceding claims, **characterized in that** said air bag deployment arrangement further comprises means for active ventilation of said air bag to control the duration of deployment of said first deployment volume (11).

10. Method for deploying an air bag using an air bag deployment arrangement for a vehicle, said air bag deployment arrangement comprises;
at least one air bag (10), said at least one air bag (10) comprises at least a first and a second deployment volume (11, 12) and a pre-deployment volume, said first deployment volume (11) being larger than said second deployment volume (12),
at least one impact sensor (8, 9, 20, 21, 22), said at least one impact sensor (8, 9, 20, 21, 22) is arranged in working cooperation with said at least one air bag (10) to detect an imminent impact at which said at least one air bag (10) is to be deployed,
said at least one impact sensor (8, 9, 20, 21, 22) is a pre-impact sensor (8, 20, 21, 22) arranged to detect an imminent impact, said method is **characterized in that**;
said air bag deployment arrangement further comprises a processing unit (13) and; **in that** the method comprises the steps of:
detecting a pre-impact scenario and thereby a probable imminent impact;
determining the probability of said imminent impact by taking into account a pre-programmed scenario, said determined probability of said imminent impact being the basis for the pre-impact deployment of said air bag (10);
deploying said at least one air bag (10) before said impact, said at least one air bag (10) being deployed into its first deployment volume (11), said first deployment volume (11) being adapted for a pre-impact deployment.

11. The method according to claim 10, **characterized in that** said method further comprises the step of;
releasing a releasable restraining device to enable said at least one air bag (10) to be deployed into said first deployment volume (11).

12. The method according to claim 11, **characterized in that** said releasable restraining device comprises at least one tether (15, 16) and **in that** said method comprises the step of;
releasing said at least one tether (15, 16) to enable said at least one air bag (10) to be deployed into said first deployment volume (11).

13. The method according to any of claims 10-12, **characterized in that** said air bag deployment arrangement further comprises at least one a post-impact sensor (9) arranged in working cooperation with said at least one air bag (10), and **in that** said method further comprises the step of;
detecting an impact by means of said at least one post-impact sensor (9); deploying an air bag (10) into a second deployment volume (12), said second deployment volume (12) being adapted for a post-impact deployment..

14. The method according to any of claims 10-13, **characterized in that** said air bag deployment arrangement comprises a pre-impact sensor arrangement comprising a long range radar sensor (22) and a camera (20), said method further comprises the steps of;
detecting a radar echo by means of said long range radar sensor (22) to determine an inbounding object's speed and distance;
determining the type and size of said object by means of said camera (20); processing said output of said long range radar sensor (22) and said camera (20) in said processing unit (13);
determining if the condition for deployment of said air bag to said first deployment volume (12) is fulfilled or not.

15. The method according to claim 14, **characterized in that** said air bag deployment arrangement further comprises a laser sensor (21), said method further comprises the step of;
determining the speed and distance of said object by means of said laser sensor (21).

16. The method according to claim 15, **characterized in that** said method comprises the step of;
replacing said long range radar sensor (22) measurements with measurements from said laser sensor (21), when said object is within reach of said laser sensor (21).

17. The method according to any of claims 10-16, **characterized in that** said air bag deployment arrangement further comprises means for active ventilation of said air bag to control the duration of deployment of said first deployment volume (11), wherein said method further comprises the step of;
actively controlling said duration time of said at least one air bag during deployment to said first deployment volume (11).

## Patentansprüche

1. Airbag-Entfaltungsanordnung für ein Fahrzeug (1), wobei die Airbag-Entfaltungsanordnung umfasst:
wenigstens einen Airbag (10), wobei der wenigstens eine Airbag (10) wenigstens ein erstes Entfaltungsvolumen (11), ein zweites Entfaltungsvolumen (12) und ein Vorentfaltungsvolumen enthält, wobei das erste Entfaltungsvolumen (11) größer ist als das zweite Entfaltungsvolumen (12);
wenigstens einen Voraufprall-Sensor (8, 20, 21, 22), wobei der wenigstens eine Voraufprall-Sensor (8, 20, 21, 22) dazu ausgelegt ist, mit dem wenigstens einen Airbag (10) zusammenzuwirken, um einen bevorstehenden Aufprall, bei dem der wenigstens eine Airbag (10) entfaltet werden soll, zu detektieren,
wobei die Airbag-Entfaltungsanordnung dazu ausgelegt ist, den wenigstens einen Airbag (10) vor dem bevorstehenden Aufprall zu entfalten, und der wenigstens eine Airbag (10) in das erste Entfaltungsvolumen (11) entfaltet wird, wobei das erste Entfaltungsvolumen (11) für eine Voraufprall-Entfaltung ausgelegt ist,
**dadurch gekennzeichnet,**
**dass** der bevorstehende Aufprall als ein Voraufprall-Szenario detektiert wird,
die Airbag-Entfaltungsanordnung eine Verarbeitungseinheit (13) enthält und der wenigstens eine Voraufprall-Sensor (8, 20, 21, 22) dazu ausgelegt ist, mit der Verarbeitungseinheit (13) und mit dem wenigstens einen Airbag (10) zusammenzuwirken,
wobei die Verarbeitungseinheit (13) das Entfalten auslöst.

2. Airbag-Entfaltungsanordnung nach Anspruch 1, **dadurch gekennzeichnet, dass** das zweite Entfaltungsvolumen (12) für eine Nachaufprall-Entfaltung ausgelegt ist.

3. Airbag-Entfaltungsanordnung nach Anspruch 1 oder 2, **dadurch gekennzeichnet, dass** die Airbag-Entfaltungsanordnung ferner einen Nachaufprall-Sensor (9) umfasst, der dazu ausgelegt ist, einen Aufprall zu detektieren, wobei der Nachaufprall-Sensor (9) mit dem wenigstens einen Airbag (10) zusammenwirkt, um den wenigstens einen Airbag (10) in das zweite Entfaltungsvolumen (12) zu entfalten.

4. Airbag-Entfaltungsanordnung nach einem der vorhergehenden Ansprüche, **dadurch gekennzeichnet, dass** das erste und das zweite Entfaltungsvolumen (11, 12) mittels einer freigebbaren Rückhaltevorrichtung reguliert werden, wobei die freigebbare Rückhaltevorrichtung dazu ausgelegt ist, den wenigstens einen Airbag (10) davon abzuhalten, das erste Entfaltungsvolumen (11) zu erreichen, während er sich in das zweite Entfaltungsvolumen (12) entfaltet.

5. Airbag-Entfaltungsanordnung nach Anspruch 4, **dadurch gekennzeichnet, dass** die freigebbare Rückhaltevorrichtung dazu ausgelegt ist, vor dem Aufprall freigegeben zu werden, so dass der wenigstens eine Airbag (10) während der Voraufprall-Entfaltung in das erste Entfaltungsvolumen (11) entfaltet werden kann.

6. Airbag-Entfaltungsanordnung nach Anspruch 4 oder 5, **dadurch gekennzeichnet, dass** die freigebbare Rückhaltevorrichtung wenigstens einen freigebbaren Gurt (15, 16) enthält.

7. Airbag-Entfaltungsanordnung nach einem der vorhergehenden Ansprüche, **dadurch gekennzeichnet, dass** der wenigstens eine Voraufprall-Sensor (8, 20, 21, 22) aus der folgenden Gruppe von Sensoren gewählt ist: Radarsensoren, Kameras und Lasersensoren.

8. Airbag-Entfaltungsanordnung nach einem der vorhergehenden Ansprüche, **dadurch gekennzeichnet, dass** sie wenigstens einen zusätzlichen Sensor enthält, der aus der folgenden Gruppe von Sensoren ausgewählt ist: Beschleunigungsmesser, Überrollsensor, Bremssensor, Insassenpositionierungssensoren wie etwa Sicherheitsgurtverwendungssensor, Sitzpositionierungssensor oder Visionssystem.

9. Airbag-Entfaltungsanordnung nach einem der vorhergehenden Ansprüche, **dadurch gekennzeichnet, dass** die Airbag-Entfaltungsanordnung ferner Mittel für die aktive Entlüftung des Airbags umfasst, um die Dauer der Entfaltung des ersten Entfaltungsvolumens (11) zu steuern.

10. Verfahren zum Entfalten eines Airbags unter Verwendung einer Airbag-Entfaltungsanordnung für ein Fahrzeug, wobei die Airbag-Entfaltungsanordnung umfasst:
wenigstens einen Airbag (10), wobei der wenigstens eine Airbag (10) wenigstens ein erstes und ein zweites Entfaltungsvolumen (11, 12) und ein Vorentfaltungsvolumen aufweist, wobei das erste Entfaltungsvolumen (11) größer ist als das zweite Entfaltungsvolumen (12),
wenigstens einen Aufprallsensor (8, 9, 20, 21, 22), wobei der wenigstens eine Aufprallsensor (8, 9, 20, 21, 22) dazu ausgelegt ist, mit dem wenigstens einen Airbag (10) zusammenzuwirken, um einen bevorstehenden Aufprall zu detektieren, bei dem der wenigstens eine Airbag (10) entfaltet werden soll,
wobei der wenigstens eine Aufprallsensor (8, 9, 20, 21, 22) ein Voraufprall-Sensor (8, 20, 21, 22) ist, der dazu ausgelegt ist, einen bevorstehenden Aufprall zu detektieren, und wobei das Verfahren **dadurch gekennzeichnet ist, dass**
die Airbag-Entfaltungsanordnung ferner eine Verarbeitungseinheit (13) umfasst und
ein Voraufprall-Szenario und **dadurch** ein wahrscheinlicher bevorstehender Aufprall detektiert werden;
die Wahrscheinlichkeit des bevorstehenden Aufpralls durch Berücksichtigen eines im Voraus programmierten Szenarios bestimmt wird, wobei die bestimmte Wahrscheinlichkeit des bevorstehenden Aufpralls die Grundlage für die Voraufprall-Entfaltung des Airbags (10) bildet; und
der wenigstens eine Airbag (10) vor dem Aufprall entfaltet wird, wobei der wenigstens eine Airbag (10) in sein erstes Entfaltungsvolumen (11) entfaltet wird, wobei das erste Entfaltungsvolumen (11) für eine Voraufprall-Entfaltung ausgelegt ist.

11. Verfahren nach Anspruch 10, **dadurch gekennzeichnet, dass** das Verfahren ferner den folgenden Schritt umfasst:
Freigeben einer freigebbaren Rückhaltevorrichtung, um zu ermöglichen, dass der wenigstens eine Airbag (10) in das erste Entfaltungsvolumen (11) entfaltet wird.

12. Verfahren nach Anspruch 11, **dadurch gekennzeichnet, dass** die freigebbare Rückhaltevorrichtung wenigstens einen Gurt (15, 16) aufweist und dass das Verfahren den folgenden Schritt umfasst:
Freigeben des wenigstens einen Gurts (15, 16), um zu ermöglichen, dass der wenigstens eine Airbag (10) in das erste Entfaltungsvolumen (11) entfaltet wird.

13. Verfahren nach einem der Ansprüche 10 bis 12, **dadurch gekennzeichnet, dass** die Airbag-Entfaltungsanordnung ferner wenigstens einen Nachaufprall-Sensor (9) umfasst, der dazu ausgelegt ist, mit dem wenigstens einen Airbag (10) zusammenzuwirken, und dass das Verfahren ferner den folgenden Schritt umfasst:
Detektieren eines Aufpralls mittels des wenigstens einen Nachaufprall-Sensors (9);
Entfalten eines Airbags (10) in ein zweites Entfaltungsvolumen (12), wobei das zweite Entfaltungsvolumen (12) für eine Nachaufprall-Entfaltung ausgelegt ist.

14. Verfahren nach einem der Ansprüche 10-13, **dadurch gekennzeichnet, dass** die Airbag-Entfaltungsanordnung eine Voraufprall-Sensoranordnung umfasst, die einen Radarsensor (22) mit großer Reichweite und eine Kamera (20) enthält, wobei das Verfahren ferner die folgenden Schritte umfasst:
Detektieren eines Radarechos mittels des Radarsensors (22) mit großer Reichweite, um die Geschwindigkeit und den Abstand eines ankommenden Objekts zu bestimmen;
Bestimmen des Typs und der Größe des Objekts mittels der Kamera (20);
Verarbeiten des Ausgangs des Radarsensors (22) mit großer Reichweite und der Kamera (20) in der Verarbeitungseinheit (13);
Bestimmen, ob die Bedingung zum Entfalten des Airbags in das erste Entfaltungsvolumen (12) erfüllt ist oder nicht.

15. Verfahren nach Anspruch 14, **dadurch gekennzeichnet, dass** die Airbag-Entfaltungsanordnung ferner einen Lasersensor (21) umfasst, wobei das Verfahren ferner den folgenden Schritt umfasst:
Bestimmen der Geschwindigkeit und des Abstands des Objekts mittels des Lasersensors (21).

16. Verfahren nach Anspruch 15, **dadurch gekennzeichnet, dass** das Verfahren den folgenden Schritt umfasst:
Ersetzen der Messungen des Radarsensors (22) mit großer Reichweite durch Messungen des Lasersensors (21), wenn sich das Objekt innerhalb der Reichweite des Lasersensors (21) befindet.

17. Verfahren nach einem der Ansprüche 10-16, **dadurch gekennzeichnet, dass** die Airbag-Entfaltungsanordnung ferner Mittel für eine aktive Entlüftung des Airbags umfasst, um die Dauer des Entfaltens des ersten Entfaltungsvolumens (11) zu steuern,
wobei das Verfahren ferner den folgenden Schritt umfasst:
aktives Steuern der Dauer, während der sich der wenigstens eine Airbag in das erste Entfaltungsvolumen (11) entfaltet.

## Revendications

1. Ensemble pour le déploiement d'un coussin gonflable de sécurité pour un véhicule (1), ledit ensemble pour le déploiement d'un coussin gonflable de sécurité comprenant :
au moins un coussin gonflable de sécurité (10), ledit au moins un coussin gonflable de sécurité (10) comprenant au moins un premier volume de déploiement (11), un deuxième volume de déploiement (12) et un volume de pré-déploiement, ledit premier volume de déploiement (11) étant plus grand que ledit deuxième volume de déploiement (12) ;
au moins un détecteur de pré-impact (8, 20, 21, 22), ledit au moins un détecteur de pré-impact (8, 20, 21, 22) étant agencé pour fonctionner en coopération avec ledit au moins un coussin gonflable de sécurité (10) afin de détecter un impact imminent sous lequel ledit au moins un coussin gonflable de sécurité (10) doit se déployer,
dans lequel ledit ensemble pour le déploiement d'un coussin gonflable de sécurité est agencé pour déployer ledit au moins un coussin gonflable de sécurité (10) avant ledit impact imminent et ledit au moins un coussin gonflable de sécurité (10) est déployé selon ledit premier volume de déploiement (11), ledit premier volume de déploiement (11) étant adapté à un déploiement de pré-impact,
***caractérisé***
***en ce que*** ledit impact imminent est détecté comme scénario de pré-impact,
ledit ensemble de déploiement d'un coussin gonflable de sécurité comprend une unité de traitement (13) et
***en ce qu***'au moins un détecteur de pré-impact (8, 20, 21, 22) est agencé pour fonctionner en coopération avec ladite unité de traitement (13) et ledit au moins un coussin gonflable de sécurité (10), ladite unité de traitement (13) déclenchant ledit déploiement.

2. Ensemble pour le déploiement d'un coussin gonflable de sécurité selon la revendication 1, ***caractérisé en ce que*** ledit deuxième volume de déploiement (12) est adapté à un déploiement de post-impact.

3. Ensemble pour le déploiement d'un coussin gonflable de sécurité selon la revendication 1 ou 2, ***caractérisé en ce que*** ledit ensemble pour le déploiement d'un coussin gonflable de sécurité comprend en outre un détecteur (9) post-impact agencé pour détecter un impact, ledit détecteur (9) post-impact étant agencé pour fonctionner en coopération avec ledit au moins un coussin gonflable de sécurité (10) pour déployer ledit au moins un coussin gonflable de sécurité jusqu'au dit deuxième volume de déploiement (12).

4. Ensemble pour le déploiement d'un coussin gonflable de sécurité selon l'une quelconque des revendications précédentes, ***caractérisé en ce que*** lesdits premier et deuxième volumes de déploiement (11, 12) sont régulés au moyen d'un dispositif de retenue libérable, ledit dispositif de retenue libérable étant agencé pour empêcher ledit au moins un coussin gonflable de sécurité (10) d'atteindre ledit premier volume de déploiement (11) pendant le déploiement en ledit deuxième volume de déploiement (12).

5. Ensemble pour le déploiement d'un coussin gonflable de sécurité selon la revendication 4, ***caractérisé en ce que*** ledit dispositif de retenue libérable est agencé pour être libéré avant impact, de telle façon qu'au moins un coussin gonflable de sécurité (10) puisse être déployé en ledit premier volume de déploiement (11) pendant ledit déploiement de pré-impact.

6. Ensemble pour le déploiement d'un coussin gonflable de sécurité selon la revendication 4 ou 5, ***caractérisé en ce que*** ledit dispositif de retenue libérable comprend au moins une attache libérable (15, 16).

7. Ensemble pour le déploiement d'un coussin gonflable de sécurité selon l'une quelconque des revendications précédentes, ***caractérisé en ce que*** ledit au moins un détecteur de pré-impact (8, 20, 21, 22) est choisi dans le groupe de détecteurs suivant : capteur radar, appareils de prise de vues et capteurs laser.

8. Ensemble pour le déploiement d'un coussin gonflable de sécurité selon l'une quelconque des revendications précédentes, ***caractérisé en ce qu*'**il comprend au moins un détecteur supplémentaire choisi dans le groupe de détecteurs suivant : accéléromètre, capteur de renversement, capteur de freinage, détecteurs de positionnement de (des) l'occupant(s) tels que détecteur d'utilisation de ceinture de sécurité, détecteur de positionnement du siège ou système de vision.

9. Ensemble pour le déploiement d'un coussin gonflable de sécurité selon l'une quelconque des revendications précédentes, ***caractérisé en ce que*** ledit ensemble pour le déploiement d'un coussin gonflable de sécurité comprend en outre des moyens pour une ventilation active dudit coussin gonflable de sécurité afin de contrôler la durée du déploiement dudit premier volume de déploiement (11).

10. Procédé de déploiement d'un coussin gonflable de sécurité utilisant un ensemble pour le déploiement d'un coussin gonflable de sécurité pour un véhicule, dans lequel ledit ensemble pour le déploiement d'un coussin gonflable de sécurité comprend :
au moins un coussin gonflable de sécurité (10), ledit au moins un coussin gonflable de sécurité (10) comprenant au moins un premier et un deuxième volumes de déploiement (11, 12) et un volume de pré-déploiement, ledit premier volume de déploiement (11) étant plus grand que ledit deuxième volume de déploiement (12) ;
au moins un détecteur d'impact (8, 9, 20, 21, 22), ledit détecteur d'impact (8, 9, 20, 21, 22) étant agencé pour fonctionner en coopération avec ledit au moins un coussin gonflable de sécurité (10) afin de détecter un impact imminent sous lequel ledit au moins un coussin gonflable de sécurité (10) doit se déployer,
où ledit au moins un détecteur d'impact (8, 9, 20, 21, 22) est un détecteur de pré-impact (8, 20, 21, 22) agencé pour détecter un impact imminent et où ledit procédé est ***caractérisé en ce que** :*
ledit ensemble pour le déploiement d'un coussin gonflable de sécurité comprend en outre une unité de traitement (13), et
par la détection d'un scénario de pré-impact et, donc, d'un probable impact imminent ;
la détermination de la probabilité dudit impact imminent en prenant en compte un scenario préprogrammé, ladite probabilité déterminée dudit impact imminent étant la base du déploiement de pré-impact dudit coussin gonflable de sécurité (10) ;
le déploiement dudit au moins un coussin gonflable de sécurité (10) avant ledit impact, ledit au moins un coussin gonflable de sécurité (10) étant déployé en son premier volume de déploiement (11), ledit premier volume de déploiement (11) étant adapté à un déploiement de pré-impact.

11. Procédé selon la revendication 10, ***caractérisé en ce que*** ledit procédé comprend en outre l'étape de :
libération d'un dispositif de retenue libérable, pour permettre audit au moins un coussin gonflable de sécurité (10) d'être déployé en ledit premier volume (11).

12. Procédé selon la revendication 11, ***caractérisé en ce que*** ledit dispositif de retenue libérable comprend au moins une attache libérable (15, 16) et ***en ce que*** ledit procédé comprend l'étape de
libération de ladite au moins une attache libérable (15, 16) pour permettre audit au moins un coussin gonflable de sécurité (10) de se déployer en ledit premier volume de déploiement (11).

13. Procédé selon l'une quelconque des revendications 10 à 12, ***caractérisé en ce que*** ledit ensemble pour le déploiement d'un coussin gonflable de sécurité comprend en outre un détecteur (9) post-impact agencé pour fonctionner en coopération avec ledit au moins un coussin gonflable de sécurité (10), et ***en ce que*** ledit procédé comprend en outre les étapes de :
détection d'un impact au moyen dudit au moins un détecteur (9) post-impact ;
déploiement d'un coussin gonflable de sécurité (10) en un deuxième volume (12) de déploiement, ledit deuxième volume de déploiement (12) étant adapté pour un déploiement post-impact.

14. Procédé selon l'une quelconque des revendication 10 à 13, ***caractérisé en ce que*** ledit ensemble pour le déploiement d'un coussin gonflable de sécurité comprenant un ensemble détecteur de pré-impact comprenant un capteur radar longue portée (22) et un appareil de prise de vues (20), ledit procédé comprenant en outre les étapes de :
détection d'un écho radar au moyen dudit capteur radar longue portée (22) pour déterminer la vitesse et la distance d'un objet en rapprochement ;
détermination du type et de la taille dudit objet au moyen dudit appareil de prise de vues (20) ;
traitement, dans ladite unité de traitement (13), de ladite sortie dudit capteur radar longue portée (22) et dudit appareil de prise de vues (20) ;
détermination de si la condition pour le déploiement dudit coussin gonflable de sécurité en ledit premier volume de déploiement (12) est remplie ou non.

15. Procédé selon la revendication 14, ***caractérisé en ce que*** ledit ensemble pour le déploiement d'un coussin gonflable de sécurité comprend en outre un capteur laser (21), ledit procédé comprenant en outre l'étape de :
détermination de la vitesse et de la distance dudit objet au moyen dudit capteur laser (21).

16. Procédé selon la revendication 15, ***caractérisé en ce que*** ledit procédé comprend l'étape de :
remplacement des mesures dudit capteur radar longue portée (22) par des mesures en provenance dudit capteur laser (21) lorsque ledit objet est à portée dudit capteur laser (21).

17. Procédé selon l'une quelconque des revendications 10 à 16, ***caractérisé en ce que*** ledit ensemble pour le déploiement du coussin gonflable de sécurité comprend en outre des moyens pour une ventilation active dudit coussin gonflable de sécurité afin de contrôler la durée du déploiement dudit premier volume de déploiement (11),
ledit procédé comprenant en outre l'étape de :
contrôle actif de ladite durée dudit au moins un coussin gonflable de sécurité pendant le déploiement en ledit premier volume de déploiement (11).
